# EUROPEAN PATENT SPECIFICATION

(11) **EP 4 130 363 B1**
(45) Date of publication and mention of the grant of the patent: **29.10.2025**
(21) Application number: 21793133.6
(22) Date of filing: 16.02.2021
(51) Int. Cl.: D02G 3/48, B60C 9/00, D02G 3/04, D02G 3/26, D02G 3/28

(54) **TIRE CORD AND TIRE**
REIFENKORD UND REIFEN
CÂBLE POUR PNEU ET PNEU

(30) Priority: 24.04.2020 JP 2020077358
(43) Date of publication of application: 08.02.2023
(73) Proprietor: Sumitomo Rubber Industries, Ltd., Kobe-shi, Hyogo 651-0072 (JP)
(72) Inventor: OKABE Noboru, Kobe-shi, Hyogo 651-0072 (JP); MISEKI Yuta, Kobe-shi, Hyogo 651-0072 (JP); MIKI Takashi, Kobe-shi, Hyogo 651-0072 (JP); SUZUKI Masumi, Kobe-shi, Hyogo 651-0072 (JP)
(74) Representative: Manitz Finsterwald Patent- und Rechtsanwaltspartnerschaft mbB
(86) International application number: PCT/JP2021/005715
(87) International publication number: WO 2021/215092

(56) References cited:
- WO-A1-2019/088464
- JP-A- 2001 001 724
- JP-A- 2001 180 220
- JP-A- 2004 210 194
- JP-A- 2007 177 360
- JP-A- 2008 307 950
- JP-A- 2017 136 888
- JP-A- 2019 178 294
- JP-A- 2020 063 336
- JP-A- H03 167 002
- JP-A- H06 192 979

## Description

### TECHNICAL FIELD

The present invention relates to a tire cord and a tire

### BACKGROUND ART

Conventionally, various tire cords used in a ply of a tire have been proposed. In addition, a nylon fiber cord may be used as a tire cord (see, for example, JP-A-2009 120981). Further prior art tire cords made from a polyester are disclosed in the following documents WO-A-2019/088464 A1, JP-A-H03 167002 A, JP-A-2001 001724 A and JP-A-2007 177360 A.

### SUMMARY OF THE INVENTION

### PROBLEM TO BE SOLVED BY THE INVENTION

In recent years, it is strongly desired to reduce the manufacturing cost of tires. For this reason, as tire cords, relatively inexpensive polyester fibers may be used instead of nylon fibers or together with nylon fibers.

However, since polyester fiber cords have a higher modulus than those of nylon fiber cords, there is a possibility that ride comfort of vehicles may be impaired when used in the cords of ply materials of the tires. In addition, polyester fiber cords tend to have poor compression fatigue resistance compared to nylon fiber cords, and there is a problem that the strength decreases due to repeated deformation in tires, resulting in breakage.

The present invention has been made in view of the above problems, and a main object of the present invention is to provide a tire cord and a tire capable of reducing the manufacturing cost of the tire while maintaining ride comfort and durability.

### MEANS FOR SOLVING THE PROBLEM

The present invention is a tire cord used in a ply of a tire, wherein the cord includes a first filament made of a polyester fiber and a second filament made of a nylon fiber which are twisted together, the cord has a stress at 2.5% elongation of from 0.05 to 0.18 N/tex, and the cord has a stress at 5.0% elongation of from 0.09 to 0.33 N/tex.

It is preferable that the tire cord according to the present invention is used as a cord for a tread reinforcing ply.

It is preferable that in the tire cord according to the present invention, the stress at 2.5% elongation is not more than 0.15 N/tex.

It is preferable that in the tire cord according to the present invention, the stress at 5.0% elongation is not more than 0.21 N/tex.

It is preferable that in the tire cord according to the present invention, the twist coefficient is from 130 to 250, wherein the twist coefficient Nd means a value obtained by multiplying the twist count N2 (times) per 10 mm of the cord by the square root of the total fineness D (dtex) of the cord.

A second aspect of the present invention is a tire comprising the above-mentioned tire cord.

In the tire according to the present invention, it is preferable that the tire cord is used in a band ply in which the tire cord is arranged at an angle of not more than 5 degrees with respect to a tire circumferential direction.

It is preferable that the tire according to the present invention comprises a tread rubber, and the tread rubber has a loss tangent tanδ at 30 degrees C of not more than 0.15.

It is preferable that the tire according to the present invention comprises a tread rubber, and the tread rubber has a loss tangent tanδ at 30 degrees C of not more than 0.13.

It is preferable that the tire according to the present invention comprises a tread rubber, and the tread rubber has a loss tangent tanδ at 30 degrees C of not more than 0.11.

In the tire according to the present invention, it is preferable that a product of the tangent tanδ of the tread rubber at 30 degrees C and the stress (N/tex) at 2% elongation of the tire cord is not more than 0.02.

It is preferable that the tire according to the present invention comprises a tread portion, the tread portion comprises a crown land portion closest to a tire equator, and a width of the crown land portion in a tire axial direction increases inwardly in a tire radial direction.

It is preferable that the tire according to the present invention is provided with a circumferential groove extending continuously in the tire circumferential direction provided on both sides of the crown land portion, and a width W2 in the tire axial direction of the crown land portion at a position of 95% of a maximum depth of the circumferential grooves is from 102% to 115% of a width W1 in the tire axial direction of the crown land portion on a tread surface.

### EFFECTS OF THE INVENTION

The present invention is directed to a tire cord used in a ply of a tire, wherein the cord includes a first filament made of a polyester fiber and a second filament made of a nylon fiber which are twisted together, the cord has a stress at 2.5% elongation of from 0.05 to 0.18 N/tex, and the cord has a stress at 5.0% elongation of from 0.09 to 0.33 N/tex.

In general, tire cords used in plies of tires expand with an outer diameter growth of tires due to a manufacturing process of tires and an internal pressure filling during use of tires. The inventors have found that even a relatively inexpensive polyester fiber cord can exhibit ride comfort and durability equivalent to those of nylon fiber tire cords by specifying the elongation amount to be in the range of 2.5% to 5.0% and specifying the stress in this elongation range.

As described above, according to the present invention, the manufacturing cost of the tire can be reduced while maintaining ride comfort and durability by the above configuration.

### BRIEF DESCRIPTION OF THE DRAWINGS

FIG. 1 is a meridian cross-sectional view of a tire using a tire cord according to an embodiment;
FIG. 2 is an enlarged perspective view of a ply including the tire cord not according to the present invention;
FIG. 3 is an enlarged perspective view of a tire cord according to an embodiment of the present invention; and
FIG. 4 is an enlarged cross-sectional view of a crown land portion of the present embodiment.

### DESCRIPTION OF REFERENCE SIGNS

- 1: tire
- 10: ply
- 11: tire cord
- σ1: stress at 2.5% elongation
- σ2: stress at 5.0% elongation

### EMBODIMENT FOR CARRYING OUT THE INVENTION

Hereinafter, an embodiment of the present invention will be described with reference to the drawings.

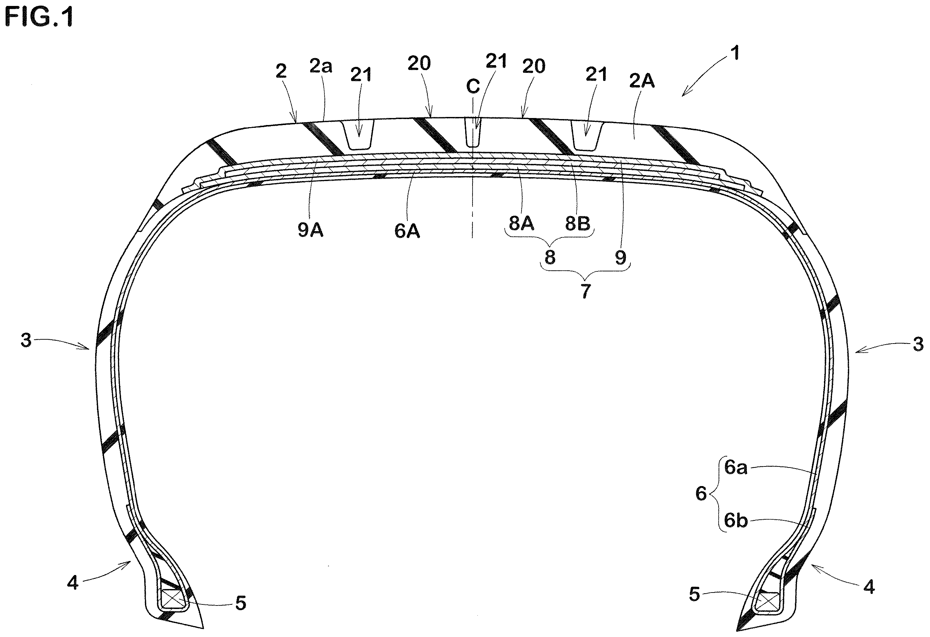

FIG. 1 is a meridian cross-sectional view of a tire 1 using a tire cord according to the present embodiment. FIG. 1 is a cross-sectional view including a rotating axis in a normal state of a tire 1. As shown in FIG. 1, the tire 1 of the present embodiment is a pneumatic tire for a passenger car. However, the tire cord of the present embodiment is not limited to such an aspect, and the tire cord of the present embodiment may be used for a tire for heavy load or a tire for a two-wheeled vehicle.

The "normal state" is a non-load state in which the tire is mounted onto a normal rim (not shown) and a normal internal pressure is filled. In the following, unless otherwise specified, dimensions and the like of the portions of the tire are values measured in this normal state.

The "normal rim" is a rim in which the standard is defined for each tire in a standard system including a standard based on the tire, and is, for example, "standard rim" in JATMA, "Design Rim" in TRA, and "Measuring Rim" in ETRTO.

The "normal internal pressure" is an air pressure defined for each tire in each standard in the standard system including the standard based on the tire, and is the "maximum air pressure" in JATMA, the maximum value described in Table "tire load limits at various cold inflation pressures" in TRA, and "inflation pressure" in ETRTO.

As shown in FIG. 1, the tire 1 of the present embodiment includes a carcass 6. The carcass 6 is composed of, for example, a single carcass ply 6A. The carcass ply 6A includes carcass cords and a topping rubber covering the carcass cords. For example, the carcass cords are oriented at an angle of from 75 to 90 degrees with respect to the tire circumferential direction. As the carcass cord, for example, an organic fiber cord such as nylon, polyester, rayon, and the like can suitably be employed. According to the present invention, the tire cord used in a ply of a tire includes a first filament 16 made of a polyester fiber and a second filament 17 made of a nylon fiber which are twisted together.

The carcass ply 6A includes a main portion 6a and turn-up portions 6b. The main portion 6a extends from the tread portion 2 to bead cores 5 of bead portions 4 through sidewall portions 3. The turn-up portions 6b are continuous with the main portion 6a and turned up around the bead cores 5 from the inner side in the tire axial direction to the outer side, and extend outward in the tire radial direction.

The tread portion 2 according to the present embodiment is provided with a tread reinforcing layer 7. The tread reinforcing layer 7, for example, includes a belt layer 8. The belt layer 8, for example, includes two belt plies 8A and 8B. Each of the belt plies 8A and 8B, for example, includes belt cords arranged so as to be inclined with respect to the tire circumferential direction, and a topping rubber covering the belt cords. The belt cords are preferably oriented at an angle of from 10 to 45 degrees with respect to the tire circumferential direction.

The tread reinforcing layer 7, for example, includes a band layer 9. The band layer 9, for example, is composed of a single band ply 9A. The band ply 9A is composed of one or more band cords oriented at an angle not more than 5 degrees with respect to the tire circumferential direction. In a preferred embodiment, the band ply 9A is configured as a so-called jointless band in which a single band cord is wound in the tire circumferential direction.

The tire cord according to the present invention is used in a ply disposed in the tire. The tire cord is preferably used for the tread reinforcing ply. As a more preferred aspect, the tire cord of the present embodiment is used as the band cord of the band ply 9A.

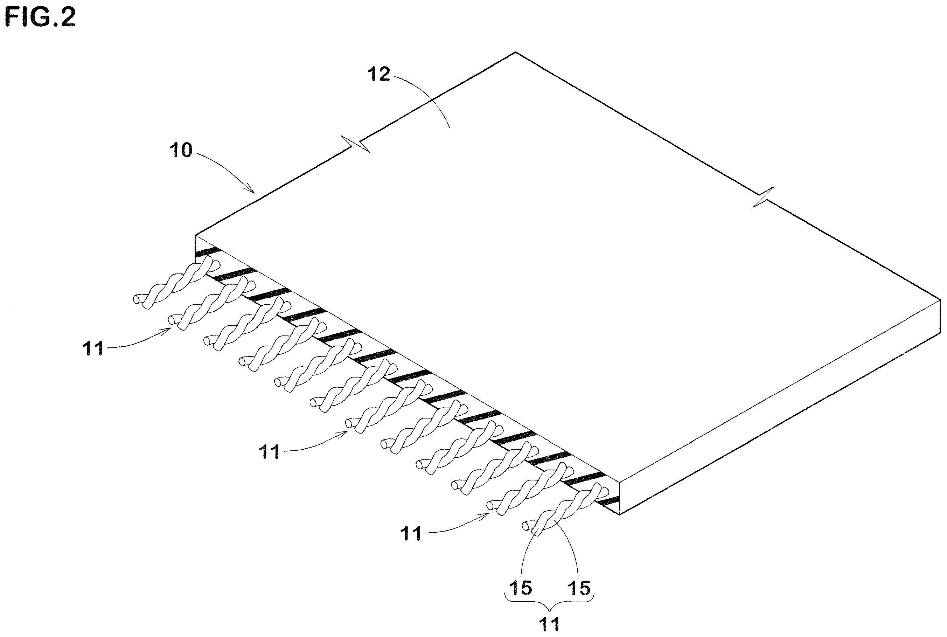

FIG. 2 is an enlarged perspective view of the ply 10 including the tire cord 11 of an embodiment not according to the invention. As shown in FIG. 2, the ply 10 is composed of a plurality of tire cords 11 which is covered with a topping rubber 12.

Each tire cord 11 includes a polyester fiber, the cord has a stress at 2.5% elongation of from 0.05 to 0.18 N/tex, and the cord has a stress at 5.0% elongation of from 0.09 to 0.33 N/tex.

In general, the tire cords 11 used in the ply 10 of the tire expand with the outer diameter growth of the tire due to the tire manufacturing process and the internal pressure filling during use of the tire. As a result of intensive studies, the inventors have found that even relatively inexpensive polyester fiber cords can approximate the physical properties of the cord at the time of using the tire to the nylon fiber cords and exhibit ride comfort and durability equivalent to those of the nylon fiber cords by specifying an elongation amount at the start of the tire use and the stress when the elongation amount is applied. As a result of various experiments, the inventors have completed the present invention by specifying the elongation amount to be in the range of 2.5 to 5.0%, and specifying the stress in this elongation range. According to the present invention, the manufacturing cost of the tire can be reduced while maintaining ride comfort and durability by the above-described configuration.

The polyester means a polycondensate synthesized by dehydration condensation of a polycarboxylic acid (dicarboxylic acid) and a polyalcohol (diol) to form an ester bond. The polyester fiber is obtained by molding a polyester into a fibrous form.

In this specification, the stress at 2.5% or 5.0% elongation is measured in accordance with JIS L1017, Chemical Fiber Tire Cord Test Method.

The stress σ1 at 2.5% elongation is preferably not more than 0.15 N/tex. The stress σ2 at 5.0% elongation is preferably not more than 0.21 N/tex. Such a tire cord 11 can serve to exhibit excellent ride comfort.

The stress σ2 is preferably of from 1.5 to 2.5 times the stress σ1. Such a tire cord 11 can serve to exhibit excellent high-speed durability.

The total fineness D of the tire cord 11, for example, is of from 1500 to 3500 dtex, preferably from 2000 to 3000 dtex.

The tire cord 11 has at least two filaments 15 twisted together. Each filament 15 may be a monofilament made of one fiber or a multifilament composed of a plurality of fibers. In the tire cord 11 of the embodiment not according to the present invention, two monofilaments made of polyester are twisted together. That is, the tire cord 11 of the present embodiment is composed of only polyester fibers. It should be noted that "the tire cord is composed of only polyester fibers" indicates that the entity exhibiting the function of the cord is composed of only polyester fibers and does not include any other fibers, and does not exclude the inclusion of incidental components (e.g., an adhesive material).

The number of twists N1 per 100 mm of the cord, for example, is of from 20 to 60 times, preferably from 30 to 50 times.

The twist coefficient Nd is exemplified as the coefficient indicating the degree of twist. In the present specification, the twist coefficient Nd means a value obtained by multiplying the twist count N2 (times) per 10 mm of the cord by the square root of the total fineness D (dtex). The twist coefficient Nd of the tire cord 11 of the present embodiment is preferably not less than 130, more preferably not less than 140, preferably not more than 250, and more preferably not more than 240. Such a tire cord 11 can be useful for improving ride comfort and durability in a well-balanced manner.

From the same viewpoint, in the present embodiment, the number of cord ends per 5 cm of ply width is of from 40 to 60.

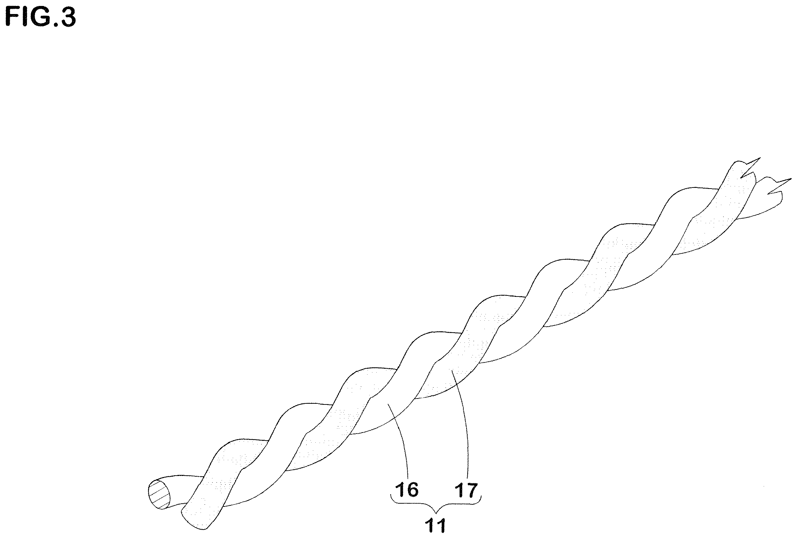

FIG. 3 is an enlarged perspective view of a tire cord 11 according to the present invention. As shown in FIG. 3, the tire cord 11 of this embodiment includes a first filament 16 made of a polyester fiber and a second filament 17 made of a nylon fiber which are twisted together (For clarity, the second filament 17 is colored in FIG. 3.). Such a tire cord 11 can exhibit the performance approximate to nylon fiber cords while reducing the cost. Note that the first filament 16 and the second filament 17 are monofilaments, but may be multi-filaments.

The fineness D1 of the first filament 16 is preferably larger than the fineness D2 of the second filament 17. Specifically, the fineness D1 is of from 101% to 105% of the fineness D2. As a result, an excellent cost reduction effect can be expected.

As shown in FIG. 1, the tread portion 2 includes a crown land portion 20 closest to the tire equator C. The tread portion 2 according to the present embodiment includes two crown land portions 20 sandwiching the tire equator C. In another embodiment, the crown land portion 20 may be disposed on the tire equator C. On both sides of the crown land portion 20, a circumferential groove 21 extending continuously in the tire circumferential direction is provided. The crown land portion 20 is considered to be likely to generate heat because a large ground pressure acts on the crown land portion 20 and a deformation amount during traveling is large.

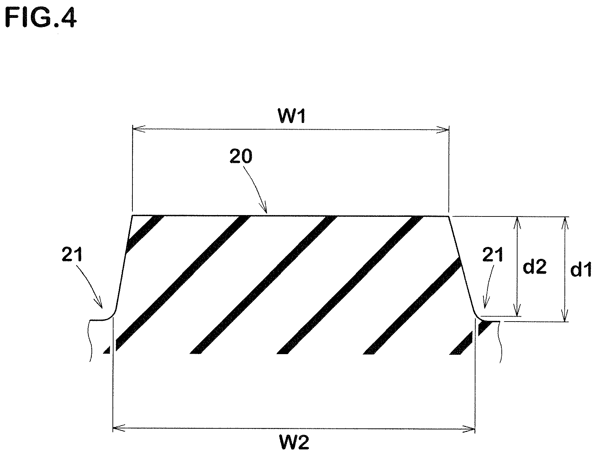

FIG. 4 illustrates an enlarged cross-sectional view of the crown land portion 20. As shown in FIG. 4, a width in the tire axial direction of the crown land portion 20 is preferably increased toward the inner side in the tire radial direction. As a result, heat of the tread surface of the crown land portion 20 becomes easy to diffuse, and the heat is less likely to be transmitted to the cord of the band layer 9 (shown in FIG. 1). Such an effect can improve the durability of the band layer 9 in the tire in which the above-described cord is applied to the band layer 9, suppress unnecessary shrinkage of the cord, and exhibit excellent ride comfort for a long period of time.

In order to exert the above-described effect while ensuring a rubber volume of the crown land portion 20, a width W2 of the crown land portion 20 in the tire axial direction at a position of 95% depth of the maximum depth d1 of the circumferential grooves 21 is preferably not less than 102% of a width W1 in the tire axial direction of the crown land portion 20 at a tread surface, more preferably not less than 105%, more preferably not less than 107%, but preferably not more than 115%, more preferably not more than 113%, and still more preferably not more than 111%.

As shown in FIG. 1, the tread portion 2 of the present embodiment includes a tread rubber 2A forming the tread surface 2a. When the heat generation of the tread rubber 2A is lowered, the heat transmitted to the cord becomes small, and the durability of the tread portion 2 and the ride comfort can be expected to be improved. Thus, a loss tangent tanδ at 30 degrees C of the tread rubber 2A is preferably not more than 0.15, more preferably not more than 0.13, still more preferably not more than 0.11. On the other hand, if the heat generation of the tread rubber 2A is excessively low, grip performance may not be sufficiently exhibited. From such a viewpoint, a loss tangent tanδ at 30 degrees C of the tread rubber 2A is preferably not less than 0.06, more preferably not less than 0.07, still more preferably not less than 0.08.

A complex elastic modulus E* at 30 degrees C of the tread rubber 2A, for example, is of from 4.5 to 10.0 MPa, preferably from 5.3 to 7.6 MPa. Such a tread rubber 2A improves steering stability and ride comfort in a well-balanced manner.

A loss tangent tanδ and a complex elastic modulus E* at 30 degrees C of the tread rubber 2A are values measured using a dynamic viscoelasticity measurement device (EPLEXOR series) manufactured by GABO Corporation under the following conditions in accordance with the specification of JIS-K6394.
Initial strain: 5%
Amplitude of dynamic strain: plus/minus 1%
Frequency: 10 Hz
Deformation mode: tension
Measurement temperature: 30 degrees C

In the present invention, the product of the loss tangent tanδ of the tread rubber 2A at 30 degrees C and a stress (N/tex) at 2% elongation of the tire cord 11 of the present invention is preferably not more than 0.02. By reducing both the stress at 2% elongation and the heat generation property of the tread rubber so as to satisfy such a relationship, it is possible to prevent heat from being transmitted from the tread portion while maintaining ride comfort performance, so that the durability performance during high-speed traveling can be improved simultaneously. The product of the loss tangent of the tread rubber and the stress at 2% elongation is preferably not more than 0.017, more preferably not more than 0.015, still more preferably not more than 0.013.

As rubber components used in the tread rubber 2A, for example, natural rubber (NR), isoprene-based rubber such as isoprene rubber (IR), butadiene rubber (BR), styrene butadiene rubber (SBR), styrene isoprene butadiene rubber (SIBR), chloroprene rubber (CR), acrylonitrile butadiene rubber (NBR), diene rubber such as butyl rubber (IIR), and the like can be mentioned. From the viewpoint of durability, it is preferable to use natural rubber (NR), butadiene rubber (BR) and styrene butadiene rubber (SBR) for the tread rubber 2A. These may be used alone or in combination of two or more different rubber components.

The content of SBR in 100 parts by mass of the rubber component used for the tread rubber 2A, for example, is preferably more than 5 parts by mass, more preferably more than 50 parts by mass. On the other hand, the upper limit of the content of SBR is preferably not more than 100 parts by mass, more preferably not more than 65 parts by mass, more preferably not more than 60 parts by mass. By setting the content within such a range, the effect of the present embodiment can be more easily obtained. The weight-average molecular weight of SBR, for example, is greater than 100000 and less than 2000000. The styrene content of SBR is preferably more than 5% by mass, more preferably more than 10% by mass, more preferably more than 20% by mass. On the other hand, from the viewpoint of heat generation and durability, the upper limit of the styrene content of SBR is preferably less than 50% by mass, more preferably less than 40% by mass, still more preferably less than 35% by mass. The vinyl bond amount (1,2-bond butadiene unit amount) of SBR, for example, is more than 5% by mass and less than 70% by mass. The structure identification (measurement of styrene content and vinyl bond amount) of SBR can be performed, for example, using a JNM-ECA series device made of Japan Electronic Co. Ltd.

The SBR is not particularly limited, and for example, emulsion polymerized styrene-butadiene rubber (E-SBR), solution polymerized styrene-butadiene rubber (S-SBR), and the like can be used. The SBR may be either a non-modified SBR or a modified SBR.

The modified SBR can be any SBR having functional groups that interact with fillers such as silica, and the like, and the examples include, for example, end-modified SBR (end-modified SBR with functional groups at the end), in which at least one end of the SBR is modified with a compound (denaturant) having functional groups, main-chain modified SBR having a functional group on the main chain, main-chain end-modified SBR with functional groups on both the main chain and the end (e.g., main-chain end-modified SBR with functional groups on the main chain and at least one end modified with a denaturant), and end-modified SBR modified (coupled) with a multifunctional compound having two or more epoxy groups in the molecule to introduce hydroxyl groups and epoxy groups.

Examples of such a functional group include amino group, amide group, silyl group, alkoxysilyl group, isocyanate group, imino group, imidazole group, urea group, ether group, carbonyl group, oxycarbonyl group, mercapto group, sulfide group, disulfide group, sulfonyl group, sulfinyl group, thiocarbonyl group, ammonium group, imide group, hydrazo group, azo group, diazo group, carboxyl group, nitrile group, pyridyl group, alkoxy group, hydroxyl group, oxy group, epoxy group, and so on. It should be noted that these functional groups may have substituents.

Further, as the modified SBR, for example, SBR modified by a compound (denaturant) represented by the following chemical formula 1 can be used.

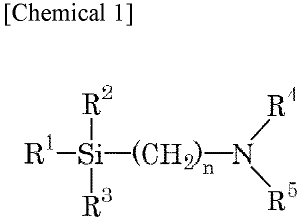

It should be noted that R1, R2, and R3 in chemical formula 1 represent the same or different alkyl groups, alkoxy groups, silyloxy groups, acetal groups, carboxyl groups (-COOH), mercapto groups (-SH), or their derivatives. R4 and R5 represent the same or different hydrogen atom or alkyl group. R4 and R5 may be bonded together to form a ring structure with a nitrogen atom. "n" represents an integer.

As a modified SBR modified by a compound represented by this chemical formula (denaturant), SBR in which the polymerization end (active end) of solution-polymerized styrene-butadiene rubber (S-SBR) is modified by a compound represented by this chemical formula (such as the modified SBR described in Japanese Unexamined Patent Application Publication No. 2010-111753) can be used.

As R1, R2, and R3, an alkoxy group (preferably an alkoxy group with 1 to 8 carbons, more preferably an alkoxy group with 1 to 4 carbons) is suitable. As R4 and R5, an alkyl group (preferably an alkyl group with 1-3 carbon atoms) is suitable. "n" is preferably 1 to 5, more preferably 2 to 4, and even more preferably 3. Further, in the case where R4 and R5 are bonded together to form a ring structure with nitrogen atoms, a 4-memberd to 8-membered ring is preferred. It should be noted that an alkoxy group also includes a cycloalkoxy group (a cyclohexyloxy group, and so on) and an aryloxy group (a phenoxy group, a benzyloxy group, and so on).

Specific denaturants include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, 3-diethylaminopropyltriethoxysilane, and the like. One of these may be used alone, or two or more of these may be used in combination.

Further, as the modified SBR, modified SBR modified by the following compounds (denaturants) can also be used. Examples of the denaturants include, for example, the followings; polyglycidyl ethers of polyhydric alcohols such as ethylene glycol diglycidyl ether, glycerin triglycidyl ether, trimethylolethane triglycidyl ether, trimethylolpropane triglycidyl ether; polyglycidyl ethers of aromatic compounds with two or more phenolic groups, such as diglycidylated bisphenol A; polyepoxy compounds such as 1,4-diglycidylbenzene, 1,3,5-triglycidylbenzene, and polyepoxidized liquid polybutadiene; tertiary amines containing epoxy groups, such as 4,4'-diglycidyl-diphenylmethylamine and 4,4'-diglycidyl-dibenzylmethylamine; diglycidylamino compounds such as diglycidyl aniline, N, N'-diglycidyl-4-glycidyloxyaniline, diglycidyl orthotoluidine, tetraglycidyl metaxylylenediamine, tetraglycidylaminodiphenylmethane, tetraglycidyl-p-phenylenediamine, diglycidylaminomethylcyclohexane, tetraglycidyl-1,3-bisaminomethylcyclohexane; amino group-containing acid chlorides such as bis-(1-methylpropyl) carbamate chloride, 4-morpholine carbonyl chloride, 1-pyrrolidine carbonyl chloride, N,N-dimethylcarbamate chloride, N,N-diethylcarbamate chloride; epoxy group-containing silane compounds such as 1,3-bis-(glycidyloxypropyl)-tetramethyldisiloxane, (3-glycidyloxypropyl)-pentamethyldisiloxane; sulfide group-containing silane compounds such as (trimethylsilyl) [3-(trimethoxysilyl) propyl] sulfide, (trimethylsilyl) [3- (triethoxysilyl) propyl] sulfide, (trimethylsilyl) [3- (tripropoxysilyl) propyl] sulfide, (trimethylsilyl) [3 -(tributoxysilyl) propyl] sulfide, (trimethylsilyl) [3- (methyldimethoxysilyl) propyl] sulfide, (trimethylsilyl) [3-(methyldiethoxysilyl) propyl] sulfide, (trimethylsilyl) [3- (methylpropoxysilyl) propyl] sulfide, (trimethylsilyl) [3- (methyldibutoxysilyl) propyl] sulfide; N-substituted aziridine compounds such as ethyleneimine and propyleneimine; alkoxysilanes such as methyltriethoxysilane, N,N-bis(trimethylsilyl)-3-aminopropyltrimethoxysilane, N,N-bis(trimethylsilyl)-3-aminopropyltriethoxysilane, N,N-bis(trimethylsilyl) aminoethyltrimethoxysilane, N,N-bis(trimethylsilyl) aminoethyltriethoxysilane; (thio)benzophenone compounds with amino groups and/or substituted amino groups such as 4-N,N-dimethylaminobenzophenone, 4-N,N-di-t-butylaminobenzophenone, 4-N,N-diphenylaminobenzophenone, 4,4'-bis (dimethylamino) benzophenone, 4,4'-bis (diethylamino) benzophenone, 4,4'-bis (diphenylamino) benzophenone, N,N,N',N'-bis-(tetraethylamino) benzophenone; benzaldehyde compounds with amino groups and/or substituted amino groups, such as 4-N,N-dimethylaminobenzaldehyde, 4-N,N-diphenylaminobenzaldehyde, and 4-N,N-divinylaminobenzaldehyde; N-substituted pyrrolidones such as N-methyl-2-pyrrolidone, N-vinyl-2-pyrrolidone, N-phenyl-2-pyrrolidone, N-t-butyl-2-pyrrolidone, N-methyl-5-methyl-2-pyrrolidone; N-substituted piperidones, such as N-methyl-2-piperidone, N-vinyl-2-piperidone, and N-phenyl-2-piperidone; N-substituted lactams, such as N-methyl-ε-caprolactam, N-phenyl-ε-caprolactam, N-methyl-ω-laurylactam, N-vinyl-ω-laurylactam, N-methyl-β-propiolactam, N-phenyl-β-propiolactam; as well as N,N-bis-(2,3-epoxypropoxy)-aniline, 4,4-methylene-bis-(N,N-glycidylaniline), tris-(2,3-epoxypropyl)-1,3,5-triazine-2,4,6-triones, N,N-diethylacetamide, N-methylmaleimide, N,N-diethylurea, 1,3-dimethylethylene urea, 1,3-divinylethylene urea, 1,3-diethyl-2-imidazolidinone, 1-Methyl-3-ethyl-2-imidazolidinone, 4-N, N-dimethylaminoacetophen, 4-N, N-diethylaminoacetophenone, 1,3-Bis (diphenylamino)-2-propanone, 1,7-Bis (Methylethylamino)-4-heptanone. It should be noted that the denaturation by these compounds (denaturants) can be carried out by known methods.

As the SBR, for example, SBR manufactured and sold by Sumitomo Chemical Co., Ltd., JSR Corporation, Asahi Kasei Corporation, Zeon Corporation, and so on can be used. It should be noted that one type of SBR may be used alone, or two or more types may be used in combination.

The content of isoprene rubber in 100 mass parts of the rubber component (total content) is preferably 5 mass parts or more, more preferably 25 mass parts or more, and even more preferably 35 mass parts or more from the point of view of obtaining good low heat generation property during high-speed running and good durability performance. On the other hand, the upper limit of the isoprene rubber content is not particularly limited, but from the point of view of wet grip performance, it is preferably 100 mass parts or less, more preferably 80 mass parts or less, and even more preferably 50 mass parts or less. Examples of the isoprene-based rubber include natural rubber (NR), isoprene rubber (IR), reformed NR, modified NR, modified IR and the like.

As the NR, those commonly used in the tire industry such as SIR20, RSS #3, TSR20, and the like can be used, for example. The IR is not particularly limited, and those commonly used in the tire industry such as IR2200 and the like can be used, for example. Examples of the reformed NR include deproteinized natural rubber (DPNR), high-purity natural rubber (UPNR), and the like, examples of the modified NR include epoxidized natural rubber (ENR), hydrogenated natural rubber (HNR), grafted natural rubber, and the like, and examples of the modified IR include epoxidized isoprene rubber, hydrogenated isoprene rubber, grafted isoprene rubber, and the like. One of these may be used alone, or two or more of these may be used in combination.

The rubber composition used for the tread rubber 2A may further contain BR if necessary. In this case, the content of BR in 100 mass parts of the rubber component is preferably more than 5 mass parts, for example, from the point of view of wear resistance. On the other hand, the upper limit of the BR content is not particularly limited, but it is preferably 100 mass parts or less, more preferably 30 mass parts or less, and even more preferably 20 mass parts or less. The weight average molecular weight of the BR is more than 100,000 and less than 2 million, for example. The amount of vinyl bonds in the BR is more than 1 mass% and less than 30 mass%, for example. The cis amount of the BR is more than 1 mass% and less than 98 mass%, for example. The trans amount of the BR is more than 1 mass% and less than 60 mass%, for example.

The BR is not particularly limited, and BR with high cis content (cis content of 90% or more), BR with low cis content, BR containing syndiotactic polybutadiene crystals, and the like can be used. The BR may be either a non-modified BR or a modified BR, and examples of the modified BR include a modified BR into which the above-mentioned functional groups have been introduced. One of these may be used alone, or two or more of these may be used in combination. It should be noted that the cis content can be measured by infrared absorption spectrometry.

As the BR, for example, products available from Ube Industries, Ltd., JSR Corporation, Asahi Kasei Corporation, and Zeon Corporation, and so on can be used.

Further, the rubber composition of the tread rubber 2A may also contain, as other rubber components, rubbers (polymers) commonly used in the manufacture of tires such as nitrile rubber (NBR) and the like.

In the present embodiment, it is preferred that the rubber composition of the tread rubber 2A contains fillers. Specific examples of the filler include, for example, silica, carbon black, calcium carbonate, talc, alumina, clay, aluminum hydroxide, mica, and the like, and among these, silica and carbon black can be preferably used as the reinforcing agent. It should be noted that, when silica is used, it is preferred that silica is used in combination with a silane coupling agent.

It is preferred that the rubber composition of the tread rubber 2A contains silica. The BET specific surface area of silica is preferably more than 140 m²/g, more preferably more than 160 m²/g, from the point of view of obtaining good durability performance. On the other hand, from the point of view of obtaining good rolling resistance during high-speed running, it is preferably less than 250 m²/g, and more preferably less than 220 m²/g. It should be noted that the BET specific surface area is the value of N2SA measured by the BET method according to ASTM D3037-93.

When silica is used as a filler-reinforcing agent, the content of silica with respect to 100 mass parts of the rubber component is preferably more than 35 mass parts, and more preferably more than 40 mass parts from the point of view of obtaining good durability performance. On the other hand, from the point of view of obtaining good rolling resistance, the upper limit of the silica content is preferably less than 70 mass parts, more preferably less than 65 mass parts, and even more preferably less than 60 mass parts.

Examples of silica include dry silica (anhydrous silica) and wet silica (hydrous silica), for example. As for silica, among these, wet silica is preferred because of its high silanol group content.

As the silica, products available from Degussa-Huls AG, Rhodia, Tosoh Silica Corporation, Solvay Japan, Ltd., Tokuyama Corporation, and the like can be used, for example.

It is preferred that the rubber composition of the tread rubber 2A contains a silane coupling agent along with silica. The silane coupling agent is not particularly limited and examples thereof include, for example, sulfide-based silane coupling agents such as bis (3-triethoxysilylpropyl) tetrasulfide, bis (2-triethoxysilylethyl) tetrasulfide, bis (4-triethoxysilylbutyl) tetrasulfide, bis (3-trimethoxysilylpropyl) tetrasulfide, bis (2-trimethoxysilylethyl) tetrasulfide, bis (2-triethoxysilylethyl) trisulfide, bis (4-trimethoxysilylbutyl) trisulfide, bis (3-triethoxysilylpropyl) disulfide, bis (2-triethoxysilylethyl) disulfide, bis (4-triethoxysilylbutyl) disulfide, bis (3-trimethoxysilylpropyl) disulfide, bis (2-trimethoxysilylethyl) disulfide, bis (4-trimethoxysilylbutyl) disulfide, 3-trimethoxysilylpropyl-N,N-dimethylthiocarbamoyltetrasulfide, 2-triethoxysilylethyl-N,N-dimethylthiocarbamoyltetrasulfide, 3-triethoxysilylpropylmethacrylate monosulfide; mercapto-based silane coupling agents such as 3-mercaptopropyltrimethoxysilane, 2-mercaptoethyltriethoxysilane, NXT and NXT-Z available from Momentive, Inc.; vinyl-based silane coupling agents such as vinyltriethoxysilane, vinyltrimethoxysilane, and the like; amino-based silane coupling agents such as 3-aminopropyltriethoxysilane, 3-aminopropyltrimethoxysilane, and the like; glysidoxy-based silane coupling agents such as γ-glycidoxypropyltriethoxysilane, γ-glycidoxypropyltrimethoxysilane, and the like; nitro-based silane coupling agents such as 3-nitropropyltrimethoxysilane, 3-nitropropyltriethoxysilane, and the like; chloro-based coupling agents such as 3-chloropropyltrimethoxysilane, 3-chloropropyltriethoxysilane, and the like. One of these may be used alone, or two or more of these may be used in combination.

As the silane coupling agents, products available from Degussa-Huls AG, Momentive, Inc., Shin-Etsu Silicone, Tokyo Chemical Industry Co., Ltd., AZmax.co, Toray Dow Corning, and others can be used, for example.

The silane coupling agent content is, for example, more than 3 parts by mass and less than 25 parts by mass per 100 parts by mass of the silica.

It is preferred that the rubber composition of the tread rubber 2Acontains carbon black. The content of the carbon black is, for example, more than 1 mass part and less than 200 mass parts per 100 mass parts of the rubber component.

Although not particularly limited, examples of the carbon black include furnace black (furnace carbon black) such as SAF, ISAF, HAF, MAF, FEF, SRF, GPF, APF, FF, CF, SCF, and ECF; acetylene black (acetylene carbon black); thermal black (thermal carbon black) such as FT and MT; channel black (channel carbon black) such as EPC, MPC, and CC; graphite, and the like. One of these may be used alone, or two or more may be used in combination.

The nitrogen adsorption specific surface area (N₂SA) of the carbon black is more than 30 m²/g and less than 250 m²/g, for example. The amount of dibutyl phthalate (DBP) absorption of carbon black is, for example, more than 50 ml/100 g and less than 250 ml/100 g, for example. It should be noted that the nitrogen adsorption specific surface area of the carbon black is measured according to ASTM D4820-93, and the DBP absorption is measured according to ASTM D2414-93.

Although not particularly limited, examples of specific carbon black are N134, N110, N220, N234, N219, N339, N330, N326, N351, N550, N762, and the like. Commercial products can be used, for example, from Asahi Carbon Corporation, Cabot Japan Corporation, Tokai Carbon Corporation, Mitsubishi Chemical Corporation, Lion Corporation, Nippon Steel Carbon Corporation, Columbia Carbon Corporation, and others. One of these may be used alone, or two or more may be used in combination.

In addition to carbon black and silica, the rubber composition of the tread rubber 2A may contain additional fillers commonly used in the tire industry, such as calcium carbonate, talc, alumina, clay, aluminum hydroxide, mica, and the like, for example. The amount of these contents is, for example, more than 0.1 mass part and less than 200 mass parts per 100 mass parts of the rubber component.

The rubber composition of the tread rubber 2Amay contain oil (including extender oil) or liquid rubber as a softener. It is preferred that the total content of these is more than 5 parts by mass per 100 parts by mass of the rubber component. The upper limit of the total content is preferably less than 70 parts by mass, more preferably less than 50 parts by mass, and even more preferably less than 30 parts by mass. It should be noted that the oil content includes the amount of oil contained in the rubber (oil extended rubber).

Examples of the oil include mineral oil (commonly referred to as process oil), vegetable oil, or mixtures thereof, for example. As mineral oil (process oil), paraffinic process oil, aromatic process oil, naphthenic process oil, and the like can be used, for example. Examples of vegetable oil include castor oil, cottonseed oil, linseed oil, rape seed oil, soybean oil, palm oil, coconut oil, peanut oil, rosin oil, pine oil, pine tar, tall oil, corn oil, rice oil, safflower oil, sesame oil, olive oil, sunflower oil, palm kernel oil, camellia oil, jojoba oil, macadamia nut oil, paulownia oil, and the like. One of these may be used alone, or two or more may be used in combination.

As for the specific process oil (mineral oil), products from Idemitsu Kosan, Sankyo Petrochemical, Japan Energy, Orisoy, H&R, Hokoku Corporation, Showa Shell Sekiyu, Fuji Kosan Company, and the like can be used, for example.

The liquid rubber mentioned as a softener is a polymer that is in a liquid state at room temperature (25° C) and is composed of the same monomers as solid rubber. Examples of the liquid rubber include farnesene-based polymers, liquid diene-based polymers, hydrogenated additives thereof, and the like.

Examples of the liquid diene-based polymers include liquid styrene-butadiene copolymer (liquid SBR), liquid butadiene polymer (liquid BR), liquid isoprene polymer (liquid IR), liquid styrene isoprene copolymer (liquid SIR), and the like.

The liquid diene-based polymers have a weight average molecular weight (Mw) in polystyrene equivalent measured by gel permeation chromatography (GPC) of more than 1.0 x 10³ and less than 2.0 x 10⁵, for example. It should be noted that the Mw of the liquid diene polymer in the present document is the polystyrene equivalent measured by gel permeation chromatography (GPC).

As the liquid rubber, products available from Kuraray Co., Ltd., Clay Valley, and the like can be used, for example.

Further, it is preferred that the rubber composition of the tread rubber 2A contains a resin component, if necessary. The resin component may be solid or liquid at room temperature, and examples of the specific resin component include, for example, styrene-based resins, coumarone-based resins, terpene-based resins, C5 resins, C9 resins, C5C9 resins, acrylic resins, and the like, and two or more of these may be used together in combination. The content of the resin component is preferably more than 2 mass parts and less than 45 mass parts, more preferably less than 30 mass parts per 100 mass parts of the rubber component.

Styrene-based resins are polymers that use styrene-based monomer as the constituent monomer, such as polymers polymerized with styrene monomer as the main component (50 mass% or more). Specific examples of the styrene-based resins include single polymers in which styrene-based monomer is polymerized alone, copolymers in which two or more styrene monomers are copolymerized, as well as copolymers of styrene monomers and other monomers that can be copolymerized with styrene monomers. Specific examples of styrene-based monomer include styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p- chlorostyrene, and the like.

Examples of other monomers include acrylonitriles, such as acrylonitrile and methacrylonitrile; acrylics; unsaturated carboxylic acids, such as methacrylic acid; unsaturated carboxylic esters, such as methyl acrylate and methyl methacrylate; dienes, such as chloroprene and butadiene isoprene; olefins, such as 1-butene and 1-pentene; α,β-unsaturated carboxylic acids, such as maleic anhydride, or acid anhydrides thereof; and others.

Among the coumarone resins, coumarone indene resin is preferred. Coumaron-indene resin is a resin that contains coumarone and indene as the monomer components that make up the backbone (main chain) of the resin. In addition to coumarone and indene, examples of the monomer components in the backbone include styrene, α-methylstyrene, methylindene, vinyltoluene, and the like.

The content of coumaronindane resin is more than 1.0 mass part and less than 50.0 mass parts per 100 mass parts of rubber component, for example.

The hydroxyl group value (OH value) of coumaronindane resin is more than 15 mg KOH/g and less than 150 mg KOH/g, for example. It should be noted that the OH value is the amount of potassium hydroxide required to neutralize the acetic acid bonded to the hydroxyl group when acetylating 1g of resin, expressed in milligrams and measured by potentiometric titration method (JIS K 0070:1992).

The softening point of coumaronindane resin is, for example, above 30° C and below 160° C. It should be noted that the softening point is the temperature at which the sphere drops when the softening point specified in JIS K 6220-1:2001 is measured by using a cyclic softening point measuring device.

Examples of the terpene-based resin include polyterpenes, terpene phenols, and aromatic modified terpene resins. Polyterpene is a resin obtained by polymerizing terpene compounds and their hydrogenated products. Terpene compounds are hydrocarbons and their oxygen-containing derivatives represented by the composition of (C₅H₈)ₙ, and are the compounds with a basic skeleton of terpenes classified as monoterpene (C₁₀H₁₆), sesquiterpene (C₁₅H₂₄), diterpene (C₂₀H₃₂), and so on. Examples of the terpene compounds include α-pinene, β-pinene, dipentene, limonene, myrcene, alloocimene, ocimene, α-feranthrene, α-terpinene, γ-terpinene, terpinolene, 1,8-cineole, 1,4-cineole, α-terpineol, β-terpineol, γ-terpineol, and the like, for example.

Examples of polyterpenes include terpene resins such as α-pinene resin, β-pinene resin, limonene resin, dipentene resin, β-pinene/limonene resin, and the like, which are made from the terpene compounds described above, as well as hydrogenated terpene resins, which are hydrogenated to the terpene resins. Examples of the terpene phenol include a resin obtained by copolymerizing a terpene compound and a phenolic compound, and a resin obtained by hydrogenating the copolymerized resin. Specific examples of the terpene phenol include a terpene compound, a phenol-based compound, and a resin obtained by condensing formalin. It should be noted that examples of the phenol-based compound include phenol, bisphenol A, cresol, xylenol and the like, for example. Examples of the aromatic-modified terpene resin include a resin obtained by modifying a terpene resin with an aromatic compound, and a resin obtained by hydrogenating the above modified resin. It should be noted that the aromatic compound is not particularly limited as long as it is a compound having an aromatic ring, and examples of the aromatic compound include, for example, phenol compounds such as phenol, alkylphenol, alkoxyphenol, unsaturated hydrocarbon group-containing phenol, and the like; naphthol compounds such as naphthol, alkylnaphthol, alkoxynaphthol, and naphthol containing unsaturated hydrocarbon groups, and the like: styrene derivatives such as styrene, alkylstyrene, alkoxystyrene, styrenes containing unsaturated hydrocarbon groups; kumaron, inden and the like.

The "C5 resin" refers to a resin obtained by polymerizing a C5 fraction. Examples of the C5 fraction include petroleum fractions having 4 to 5 carbon atoms such as cyclopentadiene, pentene, pentadiene, isoprene, and the like. As the C5 petroleum resin, a dicyclopentadiene resin (DCPD resin) is preferably used.

The "C9 resin" refers to a resin obtained by polymerizing C9 fractions, and may be hydrogenated or modified. Examples of the C9 fractions include petroleum fractions having 8 to 10 carbon atoms such as vinyltoluene, alkylstyrene, indene, methyl indene, and the like. As a specific example, kumaron indene resin, kumaron resin, indene resin, and aromatic vinyl-based resin are preferably used, for example. As for aromatic vinyl resins, a monopolymer of α-methylstyrene or styrene or a copolymer of α-methylstyrene and styrene is preferred, and a copolymer of α-methylstyrene and styrene is more preferred because it is economical, easy to process, and has excellent heat generating property. As for aromatic vinyl resins, those commercially available from Kraton, Eastman Chemical, and so on can be used, for example.

The term "C5C9 resin" refers to resins obtained by copolymerization of C5 and C9 fractions, which may be hydrogenated or modified. Examples of the C5 fraction and the C9 fraction include the above-mentioned petroleum fraction. As for the C5C9 resins, those commercially available from Tosoh Corporation, LUHUA, and so on can be used, for example.

The acrylic resins are not particularly limited, but for example, a solvent-free acrylic resin can be used.

Examples of the solvent-free acrylic resins include a (meth) acrylic resin synthesized by a high-temperature continuous polymerization method (high-temperature continuous lump polymerization method, i.e., the method described in US Patent No. 4414370; JPS59-6207; JPH5-58005; JPH1-313522; US Patent No. 5010166; Toagosei Annual Report TREND2000, No. 3, p42-45; and the like) without using polymerization initiators, chain transfer agents, organic solvents, and the like, as auxiliary raw materials as much as possible. It should be noted that, in the present invention, (meth) acrylic means methacrylic and acrylic.

Examples of the monomer component constituting the acrylic resins include (meth) acrylic acid and (meth) acrylic acid derivatives such as (meth) acrylic acid ester (alkyl ester, aryl ester, aralkyl ester, and the like), (meth) acrylamide, (meth) acrylamide derivatives, and the like, for example.

Further, as the monomer components constituting the acrylic resins, aromatic vinyls such as styrene, α-methylstyrene, vinyltoluene, vinylnaphthalene, divinylbenzene, trivinylbenzene, divinylnaphthalene and the like may be used together with (meth) acrylic acid and (meth) acrylic acid derivatives.

The acrylic resins can be resins composed solely of (meth) acrylic components or resins containing components other than (meth) acrylic components. Further, the acrylic resins may have hydroxyl groups, carboxyl groups, silanol groups, and the like.

Examples of the resin components include products available from Maruzen Petrochemical Co., Ltd., Sumitomo Bakelite Co., Ltd., Yasuhara Chemical Co., Ltd., Tosoh Corporation, Rutgers Chemicals GmbH, BASF SE, Arizona Chemical Company, LLC, Nitto Chemical Co., Ltd., Nippon Shokubai Co., Ltd., JX Energy Corporation, Arakawa Chemical Industries, Ltd., Taoka Chemical Co., Ltd., and the like, for example.

It is preferred that the rubber composition of the tread rubber 2A contains an anti-aging agent. The content of the anti-aging agent is more than 1 mass part and less than 10 mass parts with respect to 100 parts by mass of the rubber component, for example.

Examples of the antiaging agent include, for example, naphthylamine-based anti-aging agents such as phenyl-α-naphthylamine, and the like; diphenylamine-based anti-aging agents such as octylated diphenylamine, 4,4'-bis (α, α'-dimethylbenzyl) diphenylamine, and the like; p-phenylenediamine-based anti-aging agents such as N-Isopropyl-N'-phenyl-p-phenylenediamine, N-(1,3-dimethylbutyl)-N'-phenyl-p-phenylenediamine, N,N'-di-2-naphthyl-p-phenylenediamine, and the like; quinoline-based anti-aging agents such as a polymer of 2,2,4-trimethyl-1,2-dihydroquinolin, and the like; monophenolic anti-aging agents such as 2,6-di-t-butyl-4-methylphenol, styrenated phenol, and the like; bis, tris, polyphenolic anti-aging agents such as tetrakis-[methylene-3-(3',5'-di-t-butyl-4'-hydroxyphenyl) propionate] methane, and the like. One of these may be used alone, or two or more may be used in combination.

It should be noted that as the anti-aging agent, products available from Seiko Chemical Co., Ltd., Sumitomo Chemical Co., Ltd., Ouchi Shinko Chemical Industrial Co., Ltd., FlexSys Inc., and the like can be used, for example.

The rubber composition of the tread rubber 2A may contain stearic acid. The content of the stearic acid is more than 0.5 parts by mass and less than 10.0 parts by mass with respect to 100 parts by mass of the rubber component, for example. As the stearic acid, conventionally known products can be used, and for example, products such as NOF Corporation, Kao Corporation, Fujifilm Wako Pure Chemical Corporation, Chiba Fatty Acid Co., Ltd., and the like can be used.

The rubber composition of the tread rubber 2A may contain zinc oxide. The content of the zinc oxide is, for example, more than 0.5 parts by mass and less than 10 parts by mass with respect to 100 parts by mass of the rubber component. As the zinc oxide, conventionally known products can be used, for example, products available from Mitsui Mining and Smelting Co., Ltd., Toho Zinc Co., Ltd., Hakusui Tech Co., Ltd., Seido Chemical Industry Co., Ltd., Sakai Chemical Industry Co., Ltd., and the like can be used.

It is preferred that the rubber composition of the tread rubber 2A contains wax. The wax content is, for example, 0.5 to 20 parts by mass, preferably 1.0 to 15 parts by mass, more preferably 1.5 to 10 parts by mass with respect to 100 parts by mass of the rubber component.

The wax is not particularly limited, and examples thereof include petroleum wax such as paraffin wax, microcrystalline wax, and the like; natural wax such as plant wax, animal wax, and the like; synthetic wax such as polymers of ethylene, propylene, and the like. One of these may be used alone, or two or more of these may be used in combination.

It should be noted that as the wax, products available from Ouchi Shinko Chemical Industrial Co., Ltd., Nippon Seiro Co., Ltd., Seiko Chemical Co., Ltd., and so on, can be used for example.

It is preferred that the rubber composition of the tread rubber 2A contains a cross-linking agent such as sulfur. The content of the cross-linking agent is more than 0.1 part by mass and less than 10.0 parts by mass with respect to 100 parts by mass of the rubber component, for example.

Examples of the sulfur include powdered sulfur, precipitated sulfur, colloidal sulfur, insoluble sulfur, highly dispersible sulfur, and soluble sulfur, which are generally used in the rubber industry. One of these may be used alone, or two or more may be used in combination.

It should be noted that, as the sulfur, products available from Tsurumi Chemical Industry Co., Ltd., Karuizawa Sulfur Co., Ltd., Shikoku Chemicals Corporation, FlexSys Inc., Nippon Kanryu Industry Co., Ltd., Hosoi Chemical Industry Co., Ltd., and the like can be used, for example.

Examples of the cross-linking agent other than sulfur include vulcanizing agents containing sulfur atoms such as Tackirol V-200 available from Taoka Chemical Co., Ltd., Duralink HTS (1,6-hexamethylene-sodium dithiosulfate dihydrate) available from FlexSys Inc., KA9188 (1,6-bis (N, N'-dibenzylthiocarbamoyldithio) hexane) available from Lanxess AG, and the like; and organic peroxides such as dicumyl peroxide and the like, for example.

It is preferred that the rubber composition of the tread rubber 2A contains a vulcanization accelerator. The content of the vulcanization accelerator is more than 0.3 parts by mass and less than 10.0 parts by mass with respect to 100 parts by mass of the rubber component, for example.

Examples of the vulcanization accelerator include thiazole-based vulcanization accelerators such as 2-mercaptobenzothiazole, di-2-benzothiazolyl disulfide, N-cyclohexyl-2-benzothiadylsulfenamide, and the like; thiuram-based vulcanization accelerators such as tetramethylthiuram disulfide (TMTD), tetrabenzylthiuram disulfide (TBzTD), tetrakis (2-ethylhexyl) thiuram disulfide (TOT-N), and the like; sulfenamide-based vulcanization accelerators such as N-cyclohexyl-2-benzothiazolesulfenamide, N-t-butyl-2-benzothiazolylsulfenamide, N-oxyethylene-2-benzothiazolesulfenamide, N-oxyethylene-2-benzothiazolesulfenamide, N, N'-diisopropyl-2-benzothiazolesulfenamide, and the like; guanidine-based vulcanization accelerators such as diphenylguanidine, dioltotrilguanidine, orthotrilbiguanidine, and the like. One of these may be used alone, or two or more may be used in combination.

In addition to these components, the rubber composition of the tread rubber 2A may further contain additives commonly used in the tire industry, such as fatty acid metal salts, carboxylic acid metal salts, organic peroxides, and the like, for example. The content of these additives is more than 0.1 part by mass and less than 200 parts by mass with respect to 100 parts by mass of the rubber component, for example.

While detailed description has been made of an especially preferred embodiment of the present invention, the present invention can be embodied in various forms without being limited to the illustrated embodiment. Therefore, although not shown in the above-described embodiment, the tire to which the tire cord of the present invention is applied may be provided with a noise absorbing sponge or a puncture-preventing sealant on the tire cavity surface, for example.

### [Example]

Using the tire cords of the present invention for the band ply, pneumatic tires of size 215/60R16 were manufactured. As comparative examples, similar pneumatic tires were manufactured by using tire cords for a band ply that does not satisfy the invention-specific features of the present invention. The compression fatigue resistance and raw material costs of each tire cord, as well as high-speed durability and ride comfort of the test tires were tested. The test methods are as follows.

### Compression fatigue resistance of tire cord:

Based on JIS L1017 disc fatigue strength (Goodrich method) test method, the compression / bending durability of each tire cord was measured under the following conditions. The results are indicated using an index with the compression / bending durability of Comparative Example 1 as 100, and the larger the value, the better the compression fatigue resistance.
Stretch rate: 1%
Compression rate: 0.8%
Rotation speed: 2500 rpm
Time: 5 hours
Temperature: 80 degrees C.

### High speed durability:

Each test tire was evaluated by performing a high-speed durability test according to the method specified in JIS4230: 1998. The results are indicated using an index with the high-speed durability of Comparative Example 1 as 100, and the larger the value, the better the high-speed durability.
Mounting rim: 16x6.5J
Internal pressure: 210 kPa

### Ride comfort:

The ride comfort when an asphalt road surface was driven at 80 km/h with the following test vehicle was evaluated by the driver's sensuality. The results are indicated using a score with the ride comfort of Comparative Example 1 as 100, and the larger the value, the better the ride comfort.
Displacement: 2000cc
Drive system: FF
Test tire mounting location: All wheels

### Raw material cost of cord for tire:

The raw material cost of the tire cords is shown. The results are indicated using an index by the above-mentioned raw material cost of comparative example 1 as 100, and the smaller the number, the smaller the raw material cost.

The test results are shown in Tables 1 to 4 and demonstrated by comparative examples 1 to 5, reference examples 1 to 4 and 8 to 16 as well as inventive examples 5, 6, 7 and 17.

**[Table 1]**

| | Comparative example 1 | Comparative example 2 | Comparative example 3 | Comparative example 4 | Comparative example 5 | Ex. 1 |
|---|---|---|---|---|---|---|
| Tire cord material | nylon | nylon | aramid and nylon | nylon | polyester | polyester |
| Tire cord structure | 1400 dtex/2 | 1400 dtex/2 | 1100+ 940dtex | 940 dtex/2 | 1100 dtex/2 | 1100 dtex/2 |
| Total fineness D (dtex) | 2800 | 2800 | 2040 | 1880 | 2200 | 2200 |
| Twist number N1 (times) | 25 | 36 | 41 | 47 | 26 | 50 |
| Twist coefficient Nd | 132 | 190 | 185 | 204 | 122 | 235 |
| Stress σ at 2.5% elongation (N/tex) | 0.07 | 0.06 | 0.09 | 0.06 | 0.19 | 0.10 |
| Stress σ at 5.0% elongation (N/tex) | 0.14 | 0.11 | 0.34 | 0.10 | 0.36 | 0.16 |
| Tread rubber | D | D | D | D | D | D |
| Loss tangent tanδ of tread rubber | 0.15 | 0.15 | 0.15 | 0.15 | 0.15 | 0.15 |
| Complex modulus of tread rubber (MPa) | 6.8 | 6.8 | 6.8 | 6.8 | 6.8 | 6.8 |
| Ratio W2/W1 of widths of crown land portion (%) | 102 | 102 | 102 | 102 | 102 | 102 |
| Product of 2% stress and tread rubber tanδ | 0.011 | 0.009 | 0.014 | 0.009 | 0.029 | 0.015 |
| Compression fatigue resistance of tire cord (index) | 100 | 150 | 98 | 163 | 96 | 128 |
| High speed durability (index) | 100 | 95 | 110 | 90 | 110 | 100 |
| Ride comfort (score) | 100 | 105 | 95 | 105 | 90 | 105 |
| Raw material cost of tire cord (index) | 100 | 102 | 214 | 79 | 64 | 65 |

**[Table 2]**

| | Ex. 2 | Ex. 3 | Ex. 4 | Ex. 5 | Ex. 6 | Ex. 7 |
|---|---|---|---|---|---|---|
| Tire cord material | polyester | polyester | polyester | polyester and nylon | polyester and nylon | polyester and nylon |
| Tire cord structure | 1100 dtex/2 | 1100 dtex/2 | 1100 dtex/2 | 1440+ 1400dtex | 1440+ 1400dtex | 1440+ 1400tex |
| Total fineness D (dtex) | 2200 | 2200 | 2200 | 2840 | 2840 | 2840 |
| Twist number N1 (times) | 21 | 38 | 39 | 30 | 24 | 40 |
| Twist coefficient Nd | 98 | 178 | 183 | 160 | 128 | 213 |
| Stress σ at 2.5% elongation (N/tex) | 0.17 | 0.13 | 0.15 | 0.09 | 0.11 | 0.06 |
| Stress σ at 5.0% elongation (N/tex) | 0.24 | 0.20 | 0.32 | 0.18 | 0.21 | 0.14 |
| Tread rubber | D | D | D | D | D | D |
| Loss tangent tanδ of tread rubber | 0.15 | 0.15 | 0.15 | 0.15 | 0.15 | 0.15 |
| Complex modulus of tread rubber (MPa) | 6.8 | 6.8 | 6.8 | 6.8 | 6.8 | 6.8 |
| Ratio W2/W1 of widths of crown land portion (%) | 102 | 102 | 102 | 102 | 102 | 102 |
| Product of 2% stress and tread rubber tanδ | 0.026 | 0.020 | 0.023 | 0.014 | 0.017 | 0.009 |
| Compression fatigue resistance of tire cord (index) | 90 | 112 | 114 | 115 | 97 | 145 |
| High speed durability (index) | 106 | 103 | 112 | 106 | 109 | 101 |
| Ride comfort (score) | 100 | 100 | 98 | 100 | 100 | 100 |
| Raw material cost of tire cord (index) | 65 | 65 | 65 | 83 | 83 | 83 |

**[Table 3]**

| | Ex. 8 | Ex. 9 | Ex. 10 | Ex. 11 | Ex. 12 | Ex. 13 |
|---|---|---|---|---|---|---|
| Tire cord material | polyester | polyester | polyester | polyester | polyester | polyester |
| Tire cord structure | 1100 dtex/2 | 1100 dtex/2 | 1100 dtex/2 | 1100 dtex/2 | 1100 dtex/2 | 1100 dtex/2 |
| Total fineness D (dtex) | 2200 | 2200 | 2200 | 2200 | 2200 | 2200 |
| Twist number N1 (times) | 50 | 50 | 50 | 50 | 50 | 50 |
| Twist coefficient Nd | 235 | 235 | 235 | 235 | 235 | 235 |
| Stress σ at 2.5% elongation (N/tex) | 0.10 | 0.10 | 0.10 | 0.10 | 0.10 | 0.10 |
| Stress σ at 5.0% elongation (N/tex) | 0.16 | 0.16 | 0.16 | 0.16 | 0.16 | 0.16 |
| Tread rubber | D | C | B | A | A | A |
| Loss tangent tanδ of tread rubber | 0.15 | 0.14 | 0.13 | 0.11 | 0.11 | 0.11 |
| Complex modulus of tread rubber (MPa) | 6.8 | 7.6 | 6.0 | 5.3 | 5.3 | 5.3 |
| Ratio W2/W1 of width of crown land portion (%) | 102 | 102 | 102 | 102 | 105 | 107 |
| Product of 2% stress and tread rubber tanδ | 0.015 | 0.014 | 0.013 | 0.011 | 0.011 | 0.011 |
| Compression fatigue resistance of tire cord (index) | 128 | 128 | 128 | 128 | 128 | 128 |
| High speed durability (index) | 100 | 108 | 110 | 115 | 118 | 120 |
| Ride comfort (score) | 105 | 105 | 107 | 108 | 110 | 113 |
| Raw material cost of tire cord (index) | 65 | 65 | 65 | 65 | 65 | 65 |

**[Table 4]**

| | Ex. 14 | Ex. 15 | Ex. 16 | Ex. 17 |
|---|---|---|---|---|
| Tire cord material | polyester | polyester | polyester | polyester and nylon |
| Tire cord structure | 1100 dtex/2 | 1100 dtex/2 | 1100 dtex/2 | 1440+ 1400tex |
| Total fineness D (dtex) | 2200 | 2200 | 2200 | 2840 |
| Twist number N1 (times) | 50 | 50 | 50 | 40 |
| Twist coefficient Nd | 235 | 235 | 235 | 213 |
| Stress σ at 2.5% elongation (N/tex) | 0.10 | 0.10 | 0.10 | 0.06 |
| Stress σ at 5.0% elongation (N/tex) | 0.16 | 0.16 | 0.16 | 0.14 |
| Tread rubber | A | A | A | A |
| Loss tangent tanδ of tread rubber | 0.11 | 0.11 | 0.11 | 0.11 |
| Complex modulus of tread rubber (MPa) | 5.3 | 5.3 | 5.3 | 5.3 |
| Ratio W2/W1 of widths of crown land portion (%) | 111 | 113 | 115 | 111 |
| Product of 2% stress and tread rubber tanδ | 0.011 | 0.011 | 0.011 | 0.007 |
| Compression fatigue resistance of tire cord (index) | 128 | 128 | 128 | 145 |
| High speed durability (index) | 122 | 120 | 115 | 127 |
| Ride comfort (score) | 115 | 112 | 113 | 120 |
| Raw material cost of tire cord (index) | 65 | 65 | 65 | 83 |

The tread rubber compounds A to D shown in Tables 1 to 4 are as shown in Table 5 below.

**[Table 5]**

| (Unit: mass part) | | | | |
|---|---|---|---|---|
| | A | B | C | D |
| NR | 40 | 40 | 40 | 40 |
| SBR (JSR HPR850) | 50 | 50 | 50 | 50 |
| BR (BR150B) | 10 | 10 | 10 | 10 |
| Carbon black (N220) | 15 | 15 | 5.0 | 15 |
| Silica (NIPSIL VN3) | 38 | 45 | 65 | 51 |
| Silane Coupling Agent (NXT) | 3.8 | 4.5 | 6.5 | 5.1 |
| Oil (VIVATEC 500) | 7.0 | 10 | 2.0 | 12 |
| Resin component (SYLVATRAXX 4401) | 3.0 | 3.0 | 3.0 | 3.0 |
| Zinc oxide | 3.0 | 3.0 | 3.0 | 3.0 |
| Stearic acid | 3.0 | 3.0 | 3.0 | 3.0 |
| Wax | 1.0 | 1.0 | 1.0 | 1.0 |
| Anti-aging agent (6C) | 1.5 | 1.5 | 1.5 | 1.5 |
| Anti-aging agent (RD) | 1.0 | 1.0 | 1.0 | 1.0 |
| Sulfur | 1.5 | 1.5 | 1.5 | 1.5 |
| Vulcanization accelerator 1 (NS) | 2.0 | 2.0 | 2.0 | 2.0 |
| Vulcanization accelerator 2 (DPG) | 1.0 | 1.0 | 1.0 | 1.0 |
| Complex modulus of elasticity at 30 degrees C (MPa) | 5.3 | 6.0 | 7.6 | 6.8 |
| Loss tangent at 30 degrees C | 0.11 | 0.13 | 0.14 | 0.15 |

As shown in Tables 1 to 4, it is confirmed that the tire cords of the examples can reduce the raw material cost and the tire manufacturing cost while maintaining the ride comfort and durability. In addition, it is confirmed that the tires using the tire cords of the present invention can further improve high-speed durability and ride comfort because the loss tangent of the tread rubber at 30 degrees C and the widths in the tire axial direction of the crown land portion are specified.

## Claims

1. A tire cord (11) used in a ply (10) of a tire (1), wherein
the cord (11) includes a first filament (16) made of a polyester fiber and a second filament (17) made of a nylon fiber which are twisted together,
the cord (11) has a stress at 2.5% elongation of from 0.05 to 0.18 N/tex, and a stress at 5.0% elongation of from 0.09 to 0.33 N/tex,
wherein the stress at 2.5% or 5.0% elongation is measured in accordance with JIS L1017, Chemical Fiber Tire Cord Test Method.

2. The tire cord (11) according to claim 1, wherein
the cord (11) has a stress at 2.5% elongation of not more than 0.15 N/tex.

3. The tire cord (11) according to claim 1 or 2, wherein
the cord (11) has a stress at 5.0% elongation of not more than 0.21 N/tex.

4. The tire cord (11) according to any one of claims 1 to 3, wherein
the cord has a twist coefficient Nd of from 130 to 250,
wherein the twist coefficient Nd means a value obtained by multiplying the twist count N2 in times per 10 mm of the cord by the square root of the total fineness D in dtex of the cord.

5. A tire (1) comprising the tire cord (11) according to any one of claims 1 to 4.

6. The tire (1) according to claim 5, wherein
the tire cord (11) is used in a band ply (9a) in which the tire cord (11) is arranged at an angle of not more than 5 degrees with respect to a tire circumferential direction.

7. The tire (1) according to claim 5 or 6, wherein
the tire (1) comprises a tread rubber (2A), and
the tread rubber (2A) has a loss tangent tanδ at 30 degrees C of not more than 0.15,
wherein the loss tangent tanδ at 30 degrees C of the tread rubber is a value measured using a dynamic viscoelasticity measurement device under the following conditions in accordance with the specification of JIS-K6394:
Initial strain: 5%,
Amplitude of dynamic strain: plus/minus 1%,
Frequency: 10 Hz,
Deformation mode: tension,
Measurement temperature: 30 degrees C.

8. The tire (1) according to claim 7, wherein
the tread rubber (2A) has a loss tangent tanδ at 30 degrees C of not more than 0.13.

9. The tire (1) according to claim 8, wherein
the tread rubber (2A) has a loss tangent tanδ at 30 degrees C of not more than 0.11.

10. The tire (1) according to any one of claims 5 to 9, wherein
the tire (1) comprises a tread portion (2),
the tread portion (2) comprises a crown land portion (20) closest to a tire equator (C), and
a width of the crown land portion (20) in a tire axial direction increases inwardly in a tire radial direction.

11. The tire according to claim 10, wherein
a circumferential groove (21) extending continuously in the tire circumferential direction is provided on both sides of the crown land portion (20), and
a width W2 in the tire axial direction of the crown land portion (20) at a position of 95% of a maximum depth (d1) of the circumferential grooves is from 102% to 115% of a width W1 in the tire axial direction of the crown land portion (20) on a tread surface (2a).

12. Use of the tire cord according to any one of claims 1 to 4 as a cord for a tread reinforcing ply.

## Patentansprüche

1. Reifenkord (11), der in einer Lage (10) eines Reifens (1) verwendet wird, wobei
der Kord (11) ein erstes Filament (16), das aus einer Polyesterfaser hergestellt ist, und ein zweites Filament (17), das aus einer Nylonfaser hergestellt ist, umfasst, die miteinander verdrillt sind,
der Kord (11) eine Spannung bei 2,5 % Dehnung von 0,05 bis 0,18 N/tex und eine Spannung bei 5,0 % Dehnung von 0,09 bis 0,33 N/tex aufweist,
wobei die Spannung bei 2,5 % oder 5,0 % Dehnung gemäß JIS L1017, Chemical Fiber Tire Cord Test Method, gemessen ist.

2. Reifenkord (11) nach Anspruch 1, wobei der Kord (11) eine Spannung bei 2,5 % Dehnung von nicht mehr als 0,15 N/tex aufweist.

3. Reifenkord (11) nach Anspruch 1 oder 2, wobei der Kord (11) eine Spannung bei 5,0 % Dehnung von nicht mehr als 0,21 N/tex aufweist.

4. Reifenkord (11) nach einem der Ansprüche 1 bis 3, wobei
der Kord einen Verdrillungskoeffizienten Nd von 130 bis 250 aufweist,
wobei der Verdrillungskoeffizient Nd einen Wert bedeutet, der durch Multiplizieren der Verdrillungsanzahl N2 in Malen pro 10 mm des Kords mit der Quadratwurzel der Gesamtfeinheit D in dtex des Kords erhalten wird.

5. Reifen (1), umfassend den Reifenkord (11) nach einem der Ansprüche 1 bis 4.

6. Reifen (1) nach Anspruch 5, wobei der Reifenkord (11) in einer Bandlage (9a) verwendet wird, in der der Reifenkord (11) in einem Winkel von nicht mehr als 5 Grad in Bezug auf eine Reifenumfangsrichtung angeordnet ist.

7. Reifen (1) nach Anspruch 5 oder 6, wobei
der Reifen (1) einen Laufflächengummi (2A) umfasst, und
der Laufflächengummi (2A) einen Verlusttangens tanδ bei 30 Grad C von nicht mehr als 0,15 aufweist,
wobei der Verlusttangens tanδ bei 30 Grad C des Laufflächengummis ein Wert ist, der unter Verwendung einer Messvorrichtung für die dynamische Viskoelastizität unter den folgenden Bedingungen gemäß der Spezifikation von JIS-K6394 gemessen ist:
Anfangsdehnung: 5 %,
Amplitude der dynamischen Dehnung: plus/minus 1 %,
Frequenz: 10 Hz,
Verformungsmodus: Spannung,
Messtemperatur: 30 Grad C.

8. Reifen (1) nach Anspruch 7, wobei der Laufflächengummi (2A) einen Verlusttangens tanδ bei 30 Grad C von nicht mehr als 0,13 aufweist.

9. Reifen (1) nach Anspruch 8, wobei der Laufflächengummi (2A) einen Verlusttangens tanδ bei 30 Grad C von nicht mehr als 0,11 aufweist.

10. Reifen (1) nach einem der Ansprüche 5 bis 9, wobei
der Reifen (1) einen Laufflächenabschnitt (2) umfasst,
der Laufflächenabschnitt (2) einen Kronenlandabschnitt (20) umfasst, der einem Reifenäquator (C) am nächsten ist, und
eine Breite des Kronenlandabschnitts (20) in einer Reifenaxialrichtung in einer Reifenradialrichtung nach innen hin zunimmt.

11. Reifen nach Anspruch 10, wobei
eine Umfangsrille (21), die sich kontinuierlich in der Reifenumfangsrichtung erstreckt, auf beiden Seiten des Kronenlandabschnitts (20) vorgesehen ist, und
eine Breite W2 in der Reifenaxialrichtung des Kronenlandabschnitts (20) an einer Position von 95 % einer maximalen Tiefe (d1) der Umfangsrillen von 102 % bis 115 % einer Breite W1 in der Reifenaxialrichtung des Kronenlandabschnitts (20) auf einer Laufflächenoberfläche (2a) beträgt.

12. Verwendung des Reifenkords nach einem der Ansprüche 1 bis 4 als ein Kord für eine Laufflächenverstärkungslage.

## Revendications

1. Câblé de pneumatique (11) utilisé dans une nappe (10) d'un pneumatique (1), dans lequel
le câblé (11) inclut un premier filament (16) fait en fibre de polyester et un second filament (17) fait en fibre de nylon qui sont torsadés l'un et l'autre,
le câblé (11) a un effort à 2,5 % d'allongement allant de 0,05 à 0,18 N/tex, et un effort à 5,0 % d'allongement allant de 0,09 à 0,33 N/tex,
dans lequel l'effort à 2,5 % où à 5,0 % d'allongement est mesuré selon la norme industrielle japonaise JIS L1017, Chemical Fiber Tire Cord Test Method (méthode d'essai pour câblé de pneumatique en fibre chimique).

2. Câblé de pneumatique (11) selon la revendication 1, dans lequel
le câblé (11) a un effort à 2,5 % d'allongement qui n'est pas supérieur à 0,15 N/tex.

3. Câblé de pneumatique (11) selon la revendication 1 ou 2, dans lequel
le câblé (11) a un effort à 5,0 % d'allongement qui n'est pas supérieur à 0,21 N/tex.

4. Câblé de pneumatique (11) selon l'une quelconque des revendications 1 à 3, dans lequel
le câblé a un coefficient de torsion Nd allant de 130 à 250,
dans lequel le coefficient de torsion Nd signifie une valeur obtenue en multipliant le nombre de torsions N2 en fois par 10 mm de câblé par la racine carrée de la finesse totale D en dtex du câblé.

5. Pneumatique (1) comprenant le câblé de pneumatique (11) selon l'une quelconque des revendications 1 à 4.

6. Pneumatique (1) selon la revendication 5, dans lequel
le câblé de pneumatique (11) est utilisé dans une nappe de bande (9a) dans laquelle le câblé de pneumatique (11) est agencé sous un angle qui n'est pas supérieur à 5 degrés par rapport à une direction circonférentielle du pneumatique.

7. Pneumatique (1) selon la revendication 5 ou 6, dans lequel
le pneumatique (1) comprend un caoutchouc de bande de roulement (2A), et
le caoutchouc de bande de roulement (2A) a une tangente de perte tanδ à 30 degrés C qui n'est pas supérieure à 0,15,
dans lequel la tangente de perte tanδ à 30 degrés C du caoutchouc de bande de roulement est une valeur mesurée à l'aide d'un dispositif de mesurage de viscoélasticité dynamique dans les conditions suivantes selon les spécifications de la norme industrielle japonaise JIS-K6394 :
contrainte initiale : 5 %,
amplitude de contrainte dynamique : plus/moins 1 %,
fréquence : 10 Hz,
mode de déformation : traction,
température de mesurage : 30 degrés C.

8. Pneumatique (1) selon la revendication 7, dans lequel
le caoutchouc de bande de roulement (2A) a une tangente de perte tanδ à 30 degrés C qui n'est pas supérieure à 0,13.

9. Pneumatique (1) selon la revendication 8, dans lequel
le caoutchouc de bande de roulement (2A) a une tangente de perte tanδ à 30 degrés C qui n'est pas supérieure à 0,11.

10. Pneumatique (1) selon l'une quelconque des revendications 5 à 9, dans lequel
le pneumatique (1) comprend une portion formant bande de roulement (2),
la portion formant bande de roulement (2) comprend une portion en relief de couronne (20) la plus proche d'un équateur de pneumatique (C), et
une largeur de la portion en relief de couronne (20) dans une direction axiale du pneumatique augmente vers l'intérieur dans une direction radiale du pneumatique.

11. Pneumatique (1) selon la revendication 10, dans lequel
une rainure circonférentielle (21) s'étendant en continu dans la direction circonférentielle du pneumatique est prévue sur les deux côtés de la portion en relief de roulement (20), et
une largeur W2 dans la direction axiale du pneumatique de la portion en relief de couronne (20) à une position de 95 % d'une profondeur maximum (d1) des rainures circonférentielles est de 102 % à 115 % d'une largeur W1 dans la direction axiale du pneumatique de la portion en relief de couronne (20) sur une surface de bande de roulement (2a).

12. Utilisation du câblé de pneumatique selon l'une quelconque des revendications 1 à 4 en tant que câblé destiné à une nappe de renforcement de bande de roulement.
